# EUROPEAN PATENT APPLICATION

(11) **EP 4 844 160 A1**
(43) Date of publication of application: **25.11.2026**
(21) Application number: 24918568.7
(22) Date of filing: 22.11.2024
(51) Int. Cl.: E05B 49/00, B60R 25/20, E05B 19/00, G06F 21/35

(54) **LOCKING/UNLOCKING SYSTEM**

(30) Priority: 15.01.2024 JP 2024003673
(71) Applicant: Optex Co., Ltd., Otsu-shi, Shiga 520-0101 (JP)
(72) Inventor: IRIE, Kosuke, Otsu-shi, Shiga 520-0101 (JP); IKEDA, Takayasu, Otsu-shi, Shiga 520-0101 (JP)
(74) Representative: Müller Hoffmann & Partner
(86) International application number: PCT/JP2024/041533
(87) International publication number: WO 2025/154393

(57) **Abstract**

In order to provide a locking/unlocking system that enables the burden involved on-site when unlocking a lock to be reduced, while also allowing the risk of unlocking data being used without authorization to be reduced, the present invention is a locking/unlocking system that includes a locking/unlocking control device that controls a locking and an unlocking of a locking target object, and a mobile device that is capable of communicating with the locking/unlocking control device, wherein the mobile device includes an unlocking data storage unit that stores unlocking data that is used to unlock the locking target object, and an unlocking request unit that outputs the unlocking data stored in the unlocking data storage unit, and wherein the locking/unlocking control device includes a lock control unit that receives the unlocking data output from the unlocking request unit, determines whether or not this unlocking data has been previously registered, and then, in a case in which it is determined that the unlocking data has been previously registered, outputs an unlocking command signal to the locking target object, and the mobile terminal is additionally provided with a deletion unit that, in a case in which it is determined that the unlocking data output from the unlocking request unit has been used to unlock the locking target object, deletes that unlocking data from the unlocking data storage unit.

## Description

### BACKGROUND OF THE INVENTION

### 1. TECHNICAL FIELD

The present invention relates to a locking/unlocking system that controls the locking and unlocking of a locking target object.

### 2. DESCRIPTION OF THE RELATED ART

For example, among locking/unlocking systems that use what is known as a smart lock to control the locking and unlocking of a door by means of a digitalized key, there are systems, such as that as shown in Patent Document 1, that temporarily enable a door to be unlocked using what is known as a one-time password. In such systems, a one-time password is transmitted, for example, from a key management cloud to a mobile device and is then used in a door unlocking device.

If the period of time that a one-time password remains valid is kept short, then such passwords are able to improve the security of locking and unlocking systems by lowering the risk that they might be leaked and used without authorization.

### [Prior Art Document]

### [Patent Document]

Patent Document 1: Japanese Patent Application Laid-Open No. 2008-171087

However, if a one-time password is set so that it is only able to be used for a short period of time, then a person trying to unlock a door will have to acquire the one-time password while they in are the vicinity of that door.

Obtaining a one-time password might appear easy at first glance, as it can be done, for example, simply by operating a mobile device, however, operating a mobile device may be troublesome for someone whose hands are not free at that time. For example, if an unattended delivery courier whose hands are already taken up with carrying packages attempts to obtain a one-time password by operating a mobile device, they would have to firstly put down the packages in their hands, which might prove extremely troublesome.

Problems relating to the convenience and security of such locking/unlocking systems are problems that may also occur in locking/unlocking systems other than door locking/unlocking systems.

The present invention was, therefore, conceived in order to solve the above-described problems, and it is an object thereof to provide a locking/unlocking system that reduces the burden involved on-site when unlocking a lock, and also reduces the risk of unlocking data being used improperly.

### SUMMARY OF THE INVENTION

The present invention has the following configuration.
[1] A locking/unlocking system is provided with a locking/unlocking control device that controls a locking and an unlocking of a locking target object, and a mobile device that is capable of communicating with the locking/unlocking control device, and is characterized in that the mobile device includes an unlocking data storage unit that stores unlocking data that is used to unlock the locking target object, and an unlocking request unit that outputs the unlocking data stored in the unlocking data storage unit, and in that the locking/unlocking control device includes a lock control unit that receives the unlocking data output from the unlocking request unit, determines whether or not this unlocking data has been previously registered, and then, in a case in which it is determined that the unlocking data has been previously registered, outputs an unlocking command signal to the locking target object, and in that the mobile terminal is additionally provided with a deletion unit that, in a case in which it is determined that the unlocking data output from the unlocking request unit has been used to unlock the locking target object, deletes that unlocking data from the unlocking data storage unit.

If a locking/unlocking system having this type of configuration is employed, then by storing unlocking data on the mobile device in advance, it is possible to eliminate the trouble of having to acquire the unlocking data on the mobile device in the vicinity of the unlocking site, and because unlocking data that has already been used is deleted from the mobile device, this unlocking data does not remain on the mobile device so that risks such as, for example, data leaking or being used improperly can also be reduced.

Moreover, because used unlocking data is deleted from the mobile device, there is no need for unlocking data that has been registered on the locking/unlocking control device to be altered or reset. As a result, using the locking/unlocking system is made much simpler.
[2]
   The locking/unlocking system according to [1], in which the deletion unit determines that the unlocking data has been used in a case in which the locking control unit has received the unlocking data from the unlocking request unit, or a case in which the locking control unit has determined that this unlocking data has already been registered, or in a case in which the locking control unit has output the unlocking command signal to the locking target object.
[3]
   The locking/unlocking system according to [1] or [2], in which the locking/unlocking control device is provided at the site where the locking target object is located, and is configured so as to be able to communicate directly with the mobile device, and is additionally provided with an unlocking completion signal transmission unit that outputs an unlocking completion signal showing that the unlocking of the locking target object has been completed, and wherein the deletion unit determines that the unlocking data has been used in a case in which an unlocking completion signal has been received from the unlocking completion signal transmission unit, or in a case in which a communication between the mobile device and the locking/unlocking control device is terminated.

If this type of configuration is employed, then because unlocking data can be transmitted directly from a mobile device to the locking/unlocking control device at the site where the locking target object is located, even, for example, at a site without a network environment, it is still possible to unlock the locking target object. In addition, it is also possible to delete used unlocking data without having to rely on the network environment, so that the risk of date being used improperly can be reduced.

Because of this, it possible to construct a highly secure locking/unlocking system even in sites where a conventional smart lock cannot be used due to a poor network environment.

[4]
The locking/unlocking system according to [1] through [3], wherein the locking target object is a door, and the locking/unlocking control device is additionally provided with a human detection sensor that detects a person who is present within a predetermined area of the door, and the deletion unit determines that the unlocking data has been used in a case in which it is determined that a person detected by the human detection sensor has passed through the door.

According to this type of configuration, because the unlocking data is deleted in a case in which the door has been opened and a person has actually passed through (i.e., has used) the door, it is possible to prevent unlocking data being deleted in error if no person has actually passed through the door.

[5]
The locking/unlocking system according to [4], wherein, in a case in which a person who was detected within the predetermined area when the door was in an unlocked state is no longer detected, or has moved in a direction in which they would pass through the door, the deletion unit determines that the detected person has passed through the door.

According to this type of configuration, because locking/unlocking data is deleted after sufficient information has been acquired from a human detection sensor, it is possible to delete unlocking data that has been determined to have been actually used with a higher degree of certainty.

[6]
The locking/unlocking system according to any of [1] through [5], wherein, in a case in which unlocking data output from the unlocking request unit is determined to have been used a predetermined number of times to unlock the locking target object, the deletion unit deletes this unlocking data from the unlocking data storage unit.

In a case in which a locking target object is to be unlocked a plurality of times, if the unlocking data is deleted after each use, then it is necessary for unlocking data to be acquired the same number of times, which is time-consuming and troublesome. For this reason, by employing the configuration according to [6], the unlocking data can be used a predetermined number of times so that convenience is improved. Although increasing the number of times the unlocking data can be used does increase the risk of improper use, setting an appropriate predetermined number of uses enables a balance between convenience and security to be achieved.

[7]
The locking/unlocking system according to any of [1] through [5], wherein the deletion unit deletes unlocking data from the unlocking data storage unit after a predetermined period has elapsed since this unlocking data was first determined to have been used or was last determined to have been used.

By employing this type of configuration, it becomes possible to use the unlocking data multiple times within a predetermined period after the initial use, or to continue using the unlocking data as long as is possible without any gaps in usage. This is convenient in cases in which a locked object needs to be unlocked repeatedly within a certain period such as, for example, in a case in which moving company employees need to pass through an auto-locking door multiple times.

Although lengthening the predetermined usage period does increase the risk of improper use, setting an appropriate predetermined usage period enables a balance between convenience and security to be achieved.

[8]
The locking/unlocking system according to [1] through [7], wherein there is further provided a management server that is capable of communicating with the mobile device via a network, and the management server is provided with a server storage unit that stores unlocking data, and an unlocking authorization granting unit that outputs unlocking data that has been stored in the server storage unit, and wherein the mobile device is additionally provided with an unlocking authorization acquisition unit that transmits to the unlocking authorization granting unit user data that identifies a user carrying the mobile device and, in a case in which unlocking data is received from the unlocking authorization granting unit, causes the received unlocking data to be stored in the unlocking data storage unit, and wherein the unlocking authorization granting unit determines whether or not the user data received from the unlocking authorization acquisition unit has been registered in advance, and in a case in which this user data is determined to have been registered in advance, transmits unlocking data to the unlocking authorization acquisition unit.

If this type of configuration is employed, because it is possible, for example, to impart unlocking data only to registered mobile devices, any risk of the unlocking data being improperly used can be reduced.

[9]
The locking/unlocking system according to [4] or [5], wherein the mobile device and the locking/unlocking control device begin communicating with each other after the human detection sensor has detected a person.

If this type of configuration is employed, then a door can only be unlocked if a user is actually in the vicinity of that door.

[10]
An unattended delivery system provided with the locking/unlocking system according to any of [4], [5], or [9].

Unattended delivery is primarily used for delivering packages to houses where nobody is home. In multi-unit housing complexes and similar residences, in a case in which the unattended delivery location is inside a locked door such as a shared entrance or the like, the resident who is to receive the package but who is not currently at home is unable to unlock the door.

In contrast, if a smart lock system using a one-time password is installed on the door of the delivery destination multi-unit housing complex, the unattended delivery courier is able to obtain the one-time password to unlock the lock by performing a predetermined operation on their mobile device.

However, unattended delivery couriers often need to use both hands to carry the packages they are delivering, and if they were to attempt to operate their mobile device in order to obtain a one-time password, they would need to put the packages down on the ground or the like in order to free up their hands.

Having to first put their packages down on the ground near the door each time an unattended delivery is made is a significant burden for unattended delivery drivers, and in some cases, such as on rainy days and the like, it is not possible for packages to be placed on the ground.

In response to this problem, by employing the configuration described in [10], because unlocking data for unlocking the door at the delivery destination is stored in advance on the mobile device, the unattended delivery courier does not need to operate the mobile device in order to retrieve the unlocking data at the delivery destination. For example, in cases such as when the unattended delivery courier is carrying packages and has both hands occupied, the burden of having to first place the packages on the ground in front of the door can be reduced.

Moreover, because used unlocking data is deleted, the unlocking data does not remain on the mobile device 200 after an unattended delivery has been completed, thus reducing risks such as improper use of the unlocking data by unattended delivery couriers outside of work hours or the unlocking data being leaked.

According to the present invention that is configured in the manner described above, it is possible to provide a locking/unlocking system that is able to reduce the effort required at an unlocking site while simultaneously lowering the risk of unlocking data being improperly used.

### BRIEF DESCRIPTION OF THE DRAWINGS

FIG. 1 is a schematic view showing a locking/unlocking system according to an embodiment of the present invention;
FIG. 2 is a function block diagram showing functions of the locking/unlocking system of the same embodiment;
FIG. 3 is a schematic view showing device IDs that are included in a building database as well as data associated therewith according to the same embodiment;
FIG. 4 is a schematic view showing user IDs that are included in a package documentation database as well as data associated therewith according to the same embodiment;

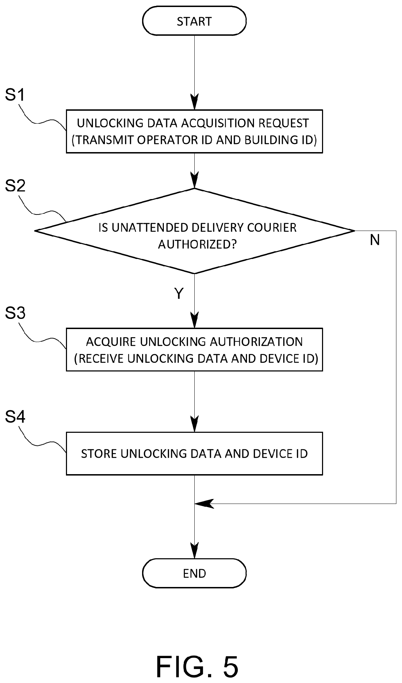

FIG. 5 is a flowchart showing an operation performed in order to obtain unlocking data in advance according to the same embodiment; and

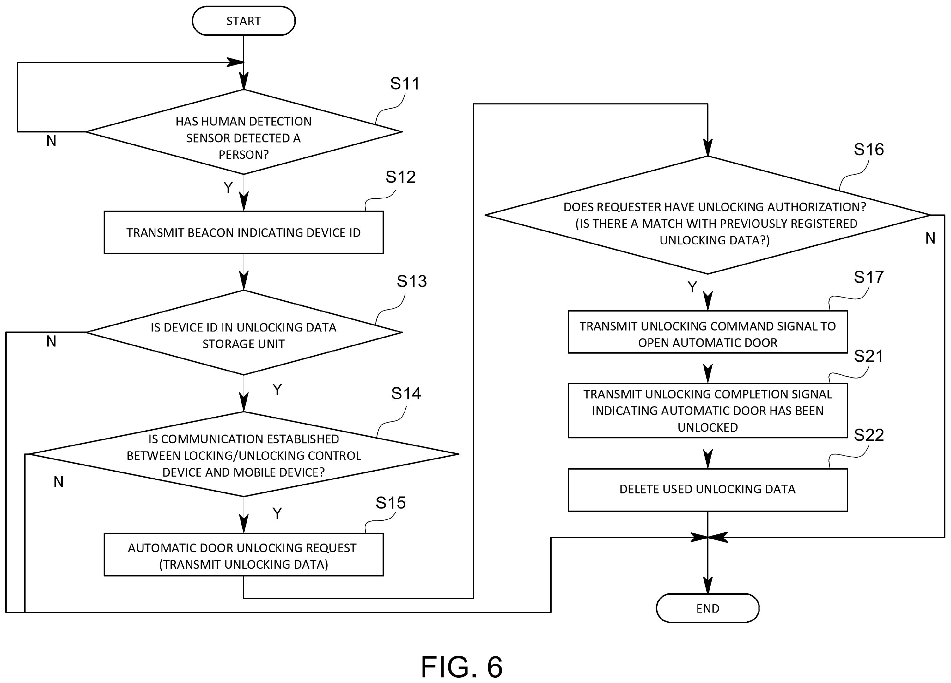

FIG. 6 is a flow chart showing an operation to unlock a locking target object and an operation to delete unlocking data according to the same embodiment.

### DETAILED DESCRIPTION

An embodiment of a locking/unlocking system according to the present invention will now be described with reference to the drawings.

### [First Embodiment]

### 1. System Overview

The locking/unlocking system according to the first embodiment is provided at a communal entrance of a multi-unit housing complex such as an apartment building (hereinafter also simply referred to as an entrance), and is used by temporary users of the facility (in this case, unattended delivery couriers) to unlock an automatic door that is locked by an auto-lock system or the like.

In this locking/unlocking system, the unattended delivery courier is able to acquire in advance the unlocking data necessary for unlocking the automatic door of the multi-unit housing complex where the delivery is to be made.

In the present embodiment, the term 'locked state' of an automatic door refers to a closed state of the door, while the term 'unlocked state' refers to an open state of the door.

### 2. System Configuration

### 2-1. Overall Configuration

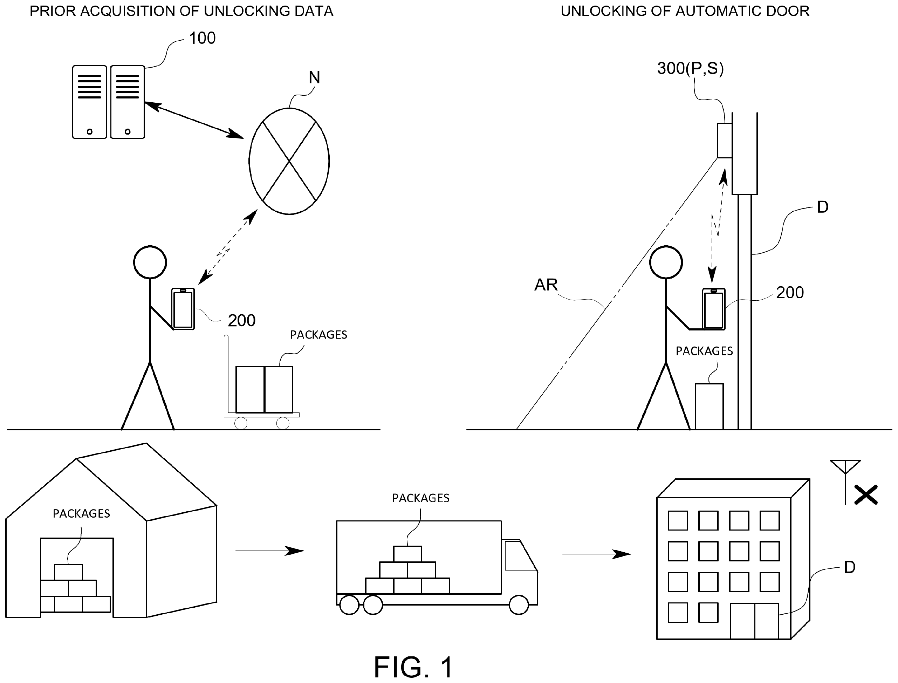

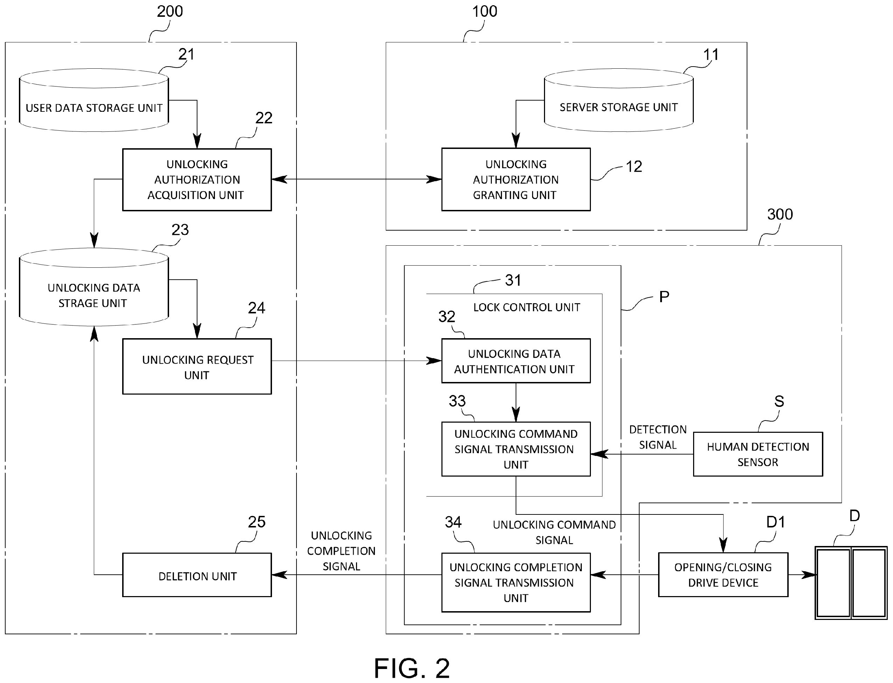

As is shown in FIG. 1 to FIG. 3, this locking/unlocking system is formed by a management server 100 that manages unlocking data for unlocking an automatic door D, a mobile device 200 carried by the unattended delivery courier, and a locking/unlocking control device 300 that is installed in the vicinity of the automatic door D and controls the locking and unlocking of this automatic door D.

The unlocking data is a key that is required in order for the locking/unlocking control device 300 to unlock the automatic door D, and is, for example, a password that is preset in the locking/unlocking control device 300.

The management server 100 and the mobile device 200 are able, for example, to send and receive signals and data to each other via a network N such as the internet or telephone lines or the like, while the mobile device 200 and the locking/unlocking control device 300 are able, for example, to directly send and receive signals and data to each other via one-to-one local communication using BLE.

### 2-2. Management Server 100

The management server 100 collectively manages the unlocking data of the locking/unlocking control device 300 that is installed in a plurality of multi-unit housing complexes or the like.

The management server 100 is a computer equipped with a CPU, memory, and a communication interface and the like and, as shown in FIG. 1, is configured so as to be able to communicate with external devices via the aforementioned network N. Note that the management server 100 may also be a virtual computer provided in the cloud.

The management server 100 performs functions of a server storage unit 11 and an unlocking authorization granting unit 12 as a result of the CPU and peripheral devices thereof operating in mutual collaboration in accordance with a predetermined program stored in the memory.

### 2-2-1. Server Storage Unit 11

The server storage unit 11 is set in a predetermined area of the memory of the management server 100.

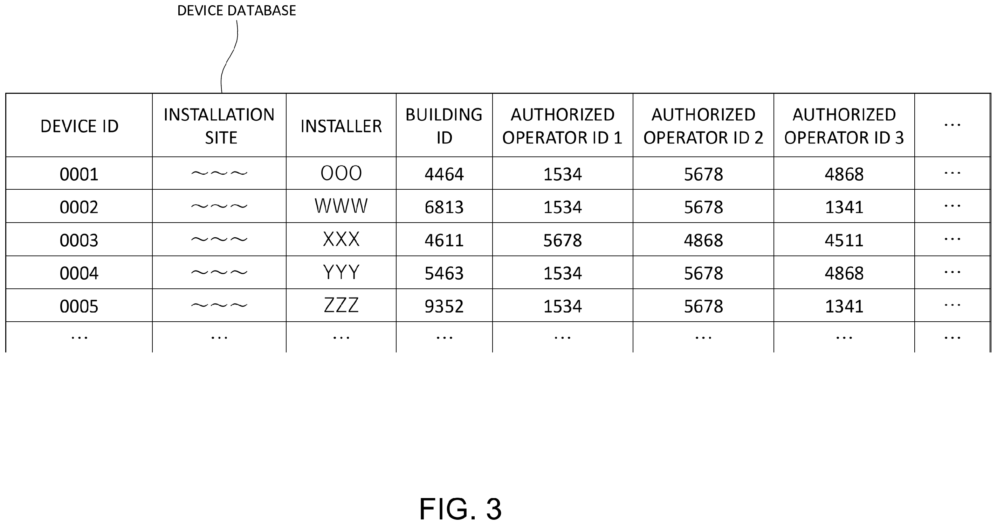

As shown in FIG. 3, this server storage unit 11 associates the building ID of a multi-unit housing complex with the device ID of the locking/unlocking control device 300 installed in that multi-unit housing complex and with the unlocking data of that locking/unlocking control device 300, and stores these in the form of a database.

In this building database, the user ID of an unattended delivery courier who is permitted to use (in this case, to make an unattended delivery to) the multi-unit housing complex indicated by the building ID is also associated with the aforementioned building ID and the like.

### 2-2-2. Unlocking Authorization Granting Unit 12

The unlocking authorization granting unit 12 confirms whether or not an unattended delivery courier is authorized to make an unattended delivery in the multi-unit housing complex where this unattended delivery courier has requested an unlocking by referring to the building database. In a case in which the unattended delivery courier is authorized, the unlocking authorization granting unit 12 outputs the unlocking data for the locking/unlocking control device 300 that is installed in that multi-unit housing complex.

The unlocking authorization granting unit 12 of the present embodiment refers to the building database, and outputs the unlocking data together with the device ID of the locking/unlocking control device 300 that is associated with that unlocking data.

### 2-3. Mobile Device 200

A mobile device 200 is a provided with a CPU, memory, input/output means such as a touch panel display or the like, and a communication interface and the like, and may be formed, for example, by a smartphone, a tablet, or a personal computer or the like. As shown in FIG. 1, the mobile device 200 is configured so as to be able to communicate with external devices via the above-described network N, Bluetooth (registered trademark), or Low Energy (known as BLE), or the like. Note that the mobile device 200 may also be a BLE tag or the like that is equipped with a microcontroller.

The mobile device 200 performs the functions of at least a user data storage unit 21, an unlocking authorization acquisition unit 22, an unlocking data storage unit 23, and an unlocking request unit 24 as a result of the CPU and peripheral devices thereof operating in mutual collaboration in accordance with a predetermined program stored in the memory.

### 2-3-1. User Data Storage Unit 21

The user data storage unit 21 is set in a predetermined area of the memory of the mobile device 200.

User data (here, user IDs in the form of individual identification numbers for each unattended delivery courier) that is used to identify users of the locking/unlocking system who carry a portable terminal 200 is stored in advance in the user data storage unit 21. A user ID may be, for example, a company ID indicating the delivery company to which the unattended delivery courier belongs, or an employee ID of the unattended delivery courier or the like.

In the present embodiment, the user IDs are stored in the user data storage unit 21 as a part of package documentation (i.e., a shipping invoice) data.

This package documentation data relates to packages handled by the unattended delivery courier who is carrying the mobile device 200, and includes information indicating the contents of the packages, information used to identify delivery destinations or delivery sources, and information indicating delivery conditions, and the like that have been mutually associated with each other. Here, the package documentation data contains at least the building ID identifying the multi-unit housing complex or the like that is serving as the delivery destination.

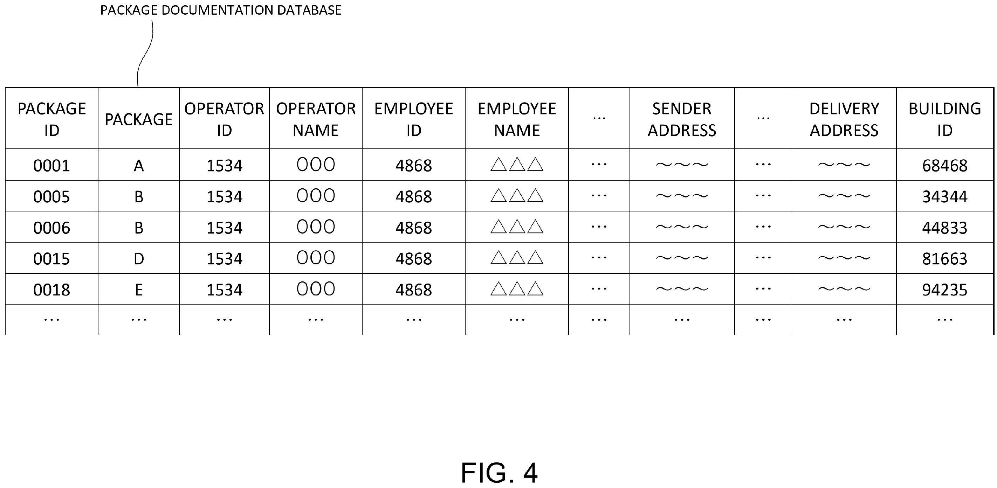

As is shown in FIG. 4, a package documentation database containing package documentation data for a plurality of packages is stored in the user data storage unit 21 of the present embodiment.

### 2-3-2. Unlocking Authorization Acquisition Unit 22

The unlocking authorization acquisition unit 22 transmits the building ID and user ID to the aforementioned unlocking authorization granting unit 12, and requests the granting of unlocking data for the locking/unlocking control device 300 installed in the multi-unit housing complex or the like indicated by that building ID. Note that it is sufficient for the unlocking authorization acquisition unit 22 to only transmit the information necessary to identify at least the locking/unlocking control device 300 to the aforementioned unlocking authorization granting unit 12, so that it is sufficient if only the device ID or user ID is transmitted.

In a case in which the unlocking authorization acquisition unit 22 receives unlocking data from the unlocking authorization granting unit 12, it stores this unlocking data in the unlocking data storage unit 23 (described below). In the present embodiment, the unlocking authorization acquisition unit 22 associates the unlocking data received from the unlocking authorization granting unit 12 with the device ID and stores these in the unlocking data storage unit 23.

The unlocking authorization acquisition unit 22 of the present embodiment is configured so as to be able to obtain the unlocking data necessary for an unattended delivery courier to deliver the packages they are responsible for by referring to the package documentation data stored in the user data storage unit 21.

The unlocking authorization acquisition unit may acquire unlocking data by referring automatically to the package documentation data, or may acquire unlocking data in a case in which the unattended delivery courier has performed a predetermined operation on the mobile device 200.

### 2-3-3. Unlocking Data Storage Unit 23

The unlocking data storage unit 23 is set in a predetermined area of the memory of the mobile device 200.

The unlocking data is associated with the device ID of the locking/unlocking control device 300 that this unlocking data locks and unlocks, and is stored in this unlocking data storage unit 23.

The unlocking data storage unit 23 is capable of storing unlocking data for a plurality of locking/unlocking control devices 300.

Note that to the extent that the unattended delivery courier is performing at least the operations required for their normal duties, the unlocking data stored in the unlocking data storage unit 23 is kept confidential from the person operating the mobile device 200, and is configured so that it cannot be displayed, for example, on a display device or the like.

In the present embodiment, the unlocking data stored in the unlocking data storage unit 23 is acquired from the management server, however, the unlocking data storage unit 23 may also store unlocking data acquired by other means. For example, it is also possible for the unlocking data storage unit 23 to store unlocking data input from an input portion of a touch panel or the like of a mobile device, or unlocking data that has been acquired in advance from other devices via wired communication.

### 2-3-4. Unlocking Request Unit 24

The unlocking request unit 24 outputs the unlocking data stored in the unlocking data storage unit 23 and requests that the automatic door be unlocked.

### 2-4. Locking/Unlocking Control Device 300

As is shown in FIG. 1 through FIG. 3, the locking/unlocking control device 300 receives unlocking data from the mobile device 200 and controls the locking and unlocking of the automatic door D. The locking/unlocking control device 300 is disposed in the vicinity of the automatic door D (here, the locking/unlocking control device 300 not visible) and is equipped with an information processing device P.

Furthermore, the locking/unlocking control device 300 of the present embodiment is additionally provided with a human detection sensor that detects a person who has entered a predetermined detection area AR. The locking/unlocking control device 300 of the present embodiment is a door sensor device that houses the aforementioned information processing device P and the human detection sensor S in a single housing. Note that it is also possible for the information processing device P and the human detection sensor S to be provided in mutually different housings.

### 2-4-1. Human Detection Sensor S

As is shown in FIG. 3 and the like, the human detection sensor S detects whether or not a person has entered the detection area AR, which is set up near the outside of a doorway area, and outputs a detection signal indicating that this has occurred. Various types of sensor can be used as this human detection sensor S, including, specifically, passive infrared sensors, active infrared sensors, radar sensors using microwaves or millimeter waves, or camera sensors using image elements or the like.

### 2-4-2. Information Processing Device P

The information processing device P is what is commonly called a computer that is provided with a CPU, memory, input/output interfaces, and communication interfaces and the like and, as is shown in FIG. 1, is configured so as to be able to communicate with external devices via BLE or the like.

This information processing device P functions as a lock control unit 31 and an unlocking completion signal transmission unit 34 as a result of the CPU and peripheral devices thereof operating in mutual collaboration accordance with a predetermined program stored in the aforementioned memory.

Device IDs that are used to identify the locking/unlocking control device 300, and unlocking data for that locking/unlocking control device 300 are stored in advance in the memory of the information processing device P. Note that the unlocking data stored in the memory in this case is registered in advance at the time when the locking/unlocking control device 300 is shipped or installed. This pre-registered unlocking data may be registered a plurality of times.

### 2-4-3. Lock Control Unit 31

As is shown in FIG. 3, the lock control unit 31 is provided with an unlocking data authentication unit 32 that authenticates the unlocking data, and an unlocking command signal transmission unit 33 that outputs an unlocking command signal to an opening/closing drive device D1 of the automatic door D based on the authentication result.

The unlocking data authentication unit 32 determines whether or not the unlocking data received from the unlocking request unit 24 has been pre-registered, and if it is determined that the unlocking data is pre-registered, determines that the authentication of the unlocking data has been successful. In the present embodiment, if the received unlocking data matches the unlocking data stored in advance in the memory of the information processing device P, then it is determined that authentication has been successful.

The unlocking command signal transmission unit 33 outputs an unlocking command signal based on the authentication result of the unlocking data authentication unit 32. However, in the present embodiment, the unlocking command signal transmission unit 33 outputs an unlocking command signal based not only on the authentication result, but also on the detection signal output from the human detection sensor S.

In other words, the lock control unit 31 of the present embodiment outputs an unlock command signal in a case in which both the unlocking data authentication unit 32 has determined that authentication has been successful, and the human detection sensor S has detected a person.

### 2-4-4. Unlocking Completion Signal Transmission Unit 34

The unlocking completion signal transmission unit 34 outputs an unlocking completion signal indicating that the unlocking of the automatic door D has been completed.

More specifically, in a case in which the unlocking completion signal transmission unit 34 has received a signal from the opening/closing drive device D1 of the automatic door D indicating that the door opening operation (i.e., unlocking operation) has been completed, then it determines that the unlocking of the automatic door D has been completed and outputs an unlocking completion signal.

### 2-5. Deletion Unit 25

Moreover, the mobile device of the present embodiment also functions as a deletion unit 25.

In a case in which it is determined that unlocking data output from the unlocking request unit 24 has been used to unlock automatic door D, the deletion unit 25 deletes this unlocking data from the unlocking data storage unit 23.

In the present embodiment, in a case in which, as a result of the unlocking data being output from the unlocking request unit 24, the deletion unit 25 receives an unlocking completion signal from the unlocking completion signal transmission unit 34, the deletion unit 25 then determines that this unlocking data has been used and deletes this used unlocking data.

Note that it is also possible for the deletion unit 25 to effectively delete unlocking data that can be used for unlocking by modifying and invalidating the unlocking data in the unlocking data storage unit 23, or by changing the status of the unlocking data to an unusable state. Deleted unlocking data should be permanently erased so that it cannot be recovered.

### 3. System Operation

### 3-1. Prior Acquisition of Unlocking Data

As is shown in FIG. 3, when an unattended delivery courier operates the portable terminal 200 and selects one package from the package documentation database, the unlocking authorization acquisition unit 22 transmits to the unlocking authorization granting unit 12 the building ID of the delivery destination associated with that package, and the user ID of the particular unattended delivery courier (Step S1).

The unlocking authorization granting unit 12 searches the building database and determines whether or not the unattended delivery courier indicated by the received user ID is authorized to make an unattended delivery to the multi-unit housing complex indicated by the received building ID (Step S2).

In a case in which it is determined that the unattended delivery is authorized, the unlocking data of the automatic door D of the multi-unit housing complex is transmitted to the unlocking authorization acquisition unit 22 together with the device ID of the locking/unlocking control device of that particular automatic door D (Step S3).

The unlocking authorization acquisition unit 22 associates the received unlocking data with the device ID and stores these in the unlocking data storage unit 23 (Step S4).

In this manner, the prior acquisition of unlocking data may be performed manually, or may be performed automatically for packages whose distance to the destination multi-unit housing complex or the like is within a predetermined distance, based, for example, on location information such as GPS or the like that is incorporated into the mobile device 200.

Note that, in the above-described step S2, it is also possible for the selected package documentation data to be sent to the unlocking authorization granting unit 12.

### 3-2. Unlocking of the Automatic Door

As is shown in FIG. 4, when an unattended delivery courier arrives at the entrance of the multi-unit housing complex serving as the delivery destination and enters the predetermined detection area AR, the human detection sensor S issues a detection signal.

In a state in which the information processing device P has received this detection signal (i.e., Step S11), it uses BLE to transmit a beacon signal indicating the device ID of the locking/unlocking control device 300 within a predetermined receiving range (Step S12).

If the device ID indicated by the received beacon signal is stored in the storage unit, the mobile device 200 of the unattended delivery courier attempts local communication with the lock control unit 31 of that locking/unlocking control device 300 (Step S13).

When local communication is established, the unlocking request unit 24 identifies the unlocking data corresponding to the device ID indicated by the beacon signal from among the unlocking data in the unlocking data storage unit 23, and transmits it to the unlocking data authentication unit 32 (Step S14 and Step S15).

The unlocking data authentication unit 32 determines whether or not the received unlocking data matches the pre-registered unlocking data, in other words, whether or not that particular unattended delivery courier has unlocking authorization (Step S16).

In a case in which it is determined that the unattended delivery courier has unlocking authorization, and the unlocking command signal transmission unit 33 is in a state of having received a detection signal from the human detection sensor S, then the unlocking command signal transmission unit 33 transmits an unlocking command signal to the opening/closing drive device D1 (Step S17), and the automatic door D is opened (i.e., unlocked).

### 3-3. Deletion of Used Unlocking Data

When the opening/closing drive device D1 opens the automatic door D, it sends a signal indicating this fact to the unlocking completion signal transmission unit 34. Upon receiving this signal, the unlocking completion signal transmission unit 34 determines that the unlocking of the automatic door D has been completed and transmits an unlocking completion signal to the deletion unit 25 (Step S21).

After receiving the unlocking completion signal, the deletion unit 25 determines that the unlocking data has been used to unlock automatic door D, and deletes the used unlocking data from the unlocking data storage unit 23 (Step S22). Note that it is also possible for the deletion unit 25 to delete previously used unlocking data from the unlocking data storage unit 23 if the mobile device 200, which has received the unlocking completion signal, has severed local communication with the locking/unlocking control device 300.

Note that the unlocking completion signal transmission unit 34 determines that the unlocking of the automatic door D has been completed in a case in which the unlocking data authentication unit 32 has received the unlocking data (Step S15), or in a case in which the authentication of the unlocking data has been successful (Step S16), or in a case in which the unlocking command signal transmission unit 33 has output an unlocking command signal (Step S17), and then outputs an unlocking completion signal.

### 4. Effects Provided by the First Embodiment

If the locking/unlocking system of the first embodiment that is configured in manner described above is employed, then because unlocking data can be stored in advance in the mobile device 200, it is not necessary for the unattended delivery courier to operate the mobile device 200 in order to obtain the unlocking data while they are in the vicinity of the automatic door D, so that it is possible to reduce the burden on the unattended delivery courier such as, for example, having to temporarily put their packages on the ground in front of the door.

Because used unlocking data is deleted, unlocking data does not remain on the mobile device 200 after an unattended delivery has been completed, thereby reducing the risk, for example, of this unlocking data being leaked and used improperly.

Because the unlocking data stored on the mobile device 200 is configured so that it is not disclosed to the person operating the mobile device 200, it is possible for the actual unlocking data itself to be stored on the mobile device 200 at the same time as the risk of this unlocking data being leaked is reduced.

Because used unlocking data is deleted from the mobile device 200, it is not necessary to change or reset the unlocking data already registered in the locking/unlocking control device 300. As a result, the locking/unlocking system can be simplified.

Because unlocking data is deleted based on the unlocking completion signal from the locking/unlocking control device 300, it is possible to delete unlocking data that is determined to have been already used with a higher degree of certainty.

In conventional smart lock systems that use one-time passwords, it is necessary, for example, for the mobile device to acquire a one-time password from a cloud-based key management system via the network in the vicinity of the door, so that it is difficult for such systems to be used in situations where the network environment near the door is unstable.

In contrast to this, by using the locking/unlocking system of the present embodiment, it is possible for unlocking data to be transmitted directly from a mobile device 200 to the locking/unlocking control device 300 at the entrance of a multi-unit housing complex where the automatic door D is installed. For this reason, even, for example, at entrances without a network environment (or with an unstable network environment), it is still possible for the automatic door D to be reliably unlocked. Furthermore, it is possible to delete used unlocking data independently of the network environment, thereby reducing the risk of the unlocking data being improperly used.

Because the system is configured so that the locking/unlocking control device 300 emits a beacon only after the human detection sensor S has detected a person, it is possible to reduce the unnecessary emission of beacons to the surrounding area.

Because the automatic door D is unlocked based on both the detection of a person by the human detection sensor S and the authentication of unlocking data, it is possible to construct a more secure locking/unlocking system for the automatic door D than a case in which the locking and unlocking of a door is controlled by only one of these methods.

Because the system is configured so that unlocking data can be acquired by the mobile device 200 in a case in which authentication by the management server 100 has been successful, the risk of the unlocking data being used improperly can be reduced.

The first embodiment is configured so that a general-purpose mobile device such as a smartphone or the like can be utilized as the mobile device 200, and so that a door sensor device can be utilized as the locking/unlocking control device 300.

If this type of configuration is employed, the smart lock system according to the present invention can be introduced into an automatic door system simply by providing this door sensor device as dedicated hardware. In addition, because it can be introduced irrespective of the network environment at the entrance to a multi-unit housing complex, the effort and costs involved in the introduction can be kept in check.

### [Second Embodiment]

The unlocking completion signal transmission unit of the above-described embodiment outputs an unlocking completion signal in a case in which a predetermined signal has been received from the opening/closing drive device D1 of the automatic door D.

In contrast to this, the unlocking completion signal transmission unit of a second embodiment outputs an unlocking completion signal based on a predetermined signal received from the opening/closing drive device D1 of the automatic door D, and on a detection signal received from the human detection sensor S.

Here, in a case in which both a predetermined signal has been received from the opening/closing drive device D1, and either the person detected by the human detection sensor S within the detection area AR is no longer being detected, or has moved in a direction in which they will pass through the doorway area, the unlocking completion signal transmission unit determines that the unlocking data has been used, and that the person has passed through the automatic door, and outputs an unlocking completion signal.

According to the locking/unlocking system that is configured in this manner, because sufficient information is obtained from the detection sensor before the locking/unlocking data is deleted, it is possible for unlocking data that is determined to have actually been used to be deleted with a higher degree of reliability.

### [Third Embodiment]

The deletion units of each of the above-described embodiments delete unlocking data that has been used on one occasion.

In contrast to this, in a case in which the deletion unit of the third embodiment determines that unlocking data output from the unlocking request unit has been used a predetermined number of times to unlock an automatic door, the deletion unit deletes this unlocking data from the unlocking data storage unit.

The deletion unit here deletes unlocking data if, for any particular unlocking data, the number of times an unlocking completion signal has been received exceeds a predetermined number of times as a result of that unlocking data being output from the unlocking request unit. The number of times the unlocking completion signal has been received is associated with the unlocking data and stored in the unlocking data storage unit.

If this configuration is employed, then the unlocking data is able to be used a predetermined number of times so that convenience is improved.
Although increasing the number of uses does increase the risk of improper use, this trade-off between convenience and security can be balanced by setting an appropriate predetermined number of uses.

### [Fourth Embodiment]

The deletion unit of the fourth embodiment deletes unlocking data from the unlocking data storage unit after a predetermined period has elapsed from the time when this unlocking data was first determined to have been used or from the time when it was last determined to have been used.

The deletion unit here deletes unlocking data in a case in which, for any particular unlocking data, a predetermined period of time has elapsed since an unlocking completion signal was first received, or since an unlocking completion signal was last received as a result of that unlocking data being output from the unlocking request unit. The time elapsed since the unlocking completion signal was received is associated with the unlocking data and stored in the unlocking data storage unit.

By employing this type of configuration, it becomes possible to use the unlocking data multiple times within a predetermined period after the initial use, or to continue using the unlocking data as long as is possible without any gaps in usage. This is convenient in cases in which an automatic door needs to be unlocked repeatedly within a certain period such as, for example, in a case in which moving company employees need to pass through an auto-locking door multiple times.

Although lengthening the usage period does increase the risk of improper use, this trade-off between convenience and security can be balanced by setting an appropriate predetermined usage period.

### [Additional Embodiments]

The unlocking data should be transmitted and received in an encrypted state between the management server and the mobile device, or between the mobile device and the locking/unlocking device. In this case, for example, the lock control unit determines whether the unlocking data received from the mobile device has been registered in advance by confirming whether or not the decrypted unlocking data matches the unlocking data stored in advance in the memory of the information processing device.

By employing this type of configuration, it is possible to reduce the risk of unlocking data being leaked, even if, for example, a third party intercepts the communication between the mobile device and the locking/unlocking device.

The unlocking command signal transmission units in each of the above-described embodiments output an unlocking command signal based on the result of the authentication of the unlocking data and on the detection status of the human detection sensor, however, it is also possible for an unlocking command signal to be output based solely on the result of the authentication of the unlocking data.

The deletion units in each of the above-described embodiments delete used unlocking data, however, it is also possible for the locking/unlocking system to delete locking data used to lock the automatic door after this locking data has been used.

It is also possible for the deletion unit to delete the unlocking data once a predetermined time has elapsed since the unlocking data was output from the unlocking request unit.

If this type of configuration is employed, then because it is possible to delete unlocking data that may possibly have been used, security can be improved. Moreover, if the predetermined period is too short, the unlocking data is deleted immediately after being output, thereby making it impossible to be reused. By adjusting the length of this predetermined period, convenience can be ensured.

Moreover, it is also possible for the deletion unit to delete previously used unlocking data from the unlocking data storage unit 23 in a case in which local communication between the mobile device and the locking/unlocking device is severed, irrespective of the unlocking status at that time. If this configuration is employed, then it is possible to delete any unlocking data that has potentially been used, irrespective of whether or not the unlocking was successful or not, thereby improving security.

In a case in which the unlocking data storage unit contains a plurality of mutually interrelated unlocking data items, and one of these is deleted as being used unlocking data, then the deletion unit may also delete any other related unlocking data entries at the same time.

If this configuration is employed, then convenience is improved as it is possible for the unlocking data associated with a plurality of packages whose delivery destination is the same multi-unit housing complex to be deleted in a single action if all of these packages have been delivered at the same time.

In a case in which the deletion unit has deleted the unlocking data, it is also possible for information indicating that the unlocking data was used (i.e., that a delivery was made) to be added to the package documentation data that was referred to in order for the deleted unlocking data to be retrieved.

The locking/unlocking systems in each of the above-described embodiments are formed by a management server, a mobile device, and a locking/unlocking control device, however, the physical configuration of the locking/unlocking system according to the present invention is not limited to this. For example, it is also possible for the locking/unlocking system to be formed by a moble device and a locking/unlocking control device. In other words, any locking/unlocking system that transmits data from a mobile device to a locking/unlocking control device, and then deletes the unlocking data used to unlock the object locked by the locking/unlocking control device from the mobile device is sufficient.

The locking/unlocking control device may also be configured so as to be able to communicate with external devices via a network N or the like. In this case, the locking/unlocking device may function as a lock control unit by remotely controlling the locking and unlocking of the locking target object.

It is also possible for a signal indicating that the unlocking data has been deleted to be transmitted from the mobile device to the management server.

If this configuration is employed, then it is possible for the status of the attached unlocking data to be managed on the management server side, thereby improving security.

Alternatively, a delete command signal commanding that the unlocking data stored in the unlocking data storage unit be deleted may be transmitted from the management server to the mobile device.

If this configuration is employed, then it is possible, once unlocking data has been supplied, for this unlocking data to be deleted from the management server side in accordance with changes in the situation or the like, thereby improving security.

It is also possible for the information processing device and the human detection sensor to be installed separately.

The locking/unlocking systems of each of the above-described embodiments control the locking and unlocking of automatic doors, which are serving as locking target objects, however, they may also control the locking and unlocking of manual doors, or even the locking and unlocking of locking target objects other than doors.

For example, the present invention may be applied to a locking/unlocking system that controls the locking and unlocking of gates that regulate the movement of vehicles, or to car sharing systems or the like in which vehicles are locked against people other than the user. It is sufficient if the present invention is a locking/unlocking system in which used unlocking data that has been used to unlock a locking target object is deleted from the mobile device.

Furthermore, it should be understood that the present invention is not limited to the above-described embodiments, and that various modifications and the like may be made thereto insofar as they do not depart from the spirit or scope of the present invention.

### Reference Characters List

- 1000: Locking/Unlocking System
- 100: Management Server
- 11: Server Storage Unit
- 12: Unlocking Authorization Granting Unit 12
- 200: Mobile Device
- 21: User Data Storage Unit
- 22: Unlocking Authorization Acquisition Unit
- 23: Unlocking Data Storage Unit
- 24: Unlocking Request Unit
- 25: Deletion Unit 23
- 300: Locking/Unlocking Control Device
- P: Information Processing Device
- S: Human Detection Sensor
- 31: Lock Control Unit
- 32: Unlocking Data Authentication Unit
- 33: Unlocking Command Signal Transmission Unit
- 34: Unlocking Completion Signal Transmission Unit
- D: Door
- D1: Opening/Closing Drive Device
- AR: Predetermined Area
- N: Network

## Claims

1. A locking/unlocking system comprising a locking/unlocking control device that controls a locking and an unlocking of a locking target object, and a mobile device that is capable of communicating with the locking/unlocking control device, wherein
the mobile device comprises:
an unlocking data storage unit that stores unlocking data that is used to unlock the locking target object; and
an unlocking request unit that outputs the unlocking data stored in the unlocking data storage unit, and wherein
the locking/unlocking control device includes a lock control unit that receives the unlocking data output from the unlocking request unit, determines whether or not this unlocking data has been previously registered, and then, in a case in which it is determined that the unlocking data has been previously registered, outputs an unlocking command signal to the locking target object, and
the mobile terminal is additionally provided with a deletion unit that, in a case in which it is determined that the unlocking data output from the unlocking request unit has been used to unlock the locking target object, deletes that unlocking data from the unlocking data storage unit.

2. The locking/unlocking system according to Claim 1, wherein the deletion unit determines that the unlocking data has been used in a case in which the locking control unit has received the unlocking data from the unlocking request unit, or in a case in which the locking control unit has determined that this unlocking data has already been registered, or in a case in which the locking control unit has output the unlocking command signal to the locking target object.

3. The locking/unlocking system according to Claim 1, wherein the locking/unlocking control device
is provided at the site where the locking target object is located, and is configured so as to be able to communicate directly with the mobile device, and
is additionally provided with an unlocking completion signal transmission unit that outputs an unlocking completion signal showing that the unlocking of the locking target object has been completed, and wherein
the deletion unit determines that the unlocking data has been used in a case in which an unlocking completion signal has been received from the unlocking completion signal transmission unit, or in a case in which a communication between the mobile device and the locking/unlocking control device is terminated.

4. The locking/unlocking system according to Claim 1, wherein the locking target object is a door, and
the locking/unlocking control device additionally comprises a human detection sensor that detects a person who is present within a predetermined area of the door, and
the deletion unit determines that the unlocking data has been used in a case in which it is determined that a person detected by the human detection sensor has passed through the door.

5. The locking/unlocking system according to Claim 4, wherein, in a case in which a person who was detected within the predetermined area when the door was in an unlocked state is no longer detected, or has moved in a direction in which they would pass through the door, the deletion unit determines that the detected person has passed through the door.

6. The locking/unlocking system according to any of Claims 1 through 5, wherein, in a case in which unlocking data output from the unlocking request unit is determined to have been used a predetermined number of times to unlock the locking target object, the deletion unit deletes this unlocking data from the unlocking data storage unit.

7. The locking/unlocking system according to any of Claims 1 through 5, wherein the deletion unit deletes unlocking data from the unlocking data storage unit after a predetermined period has elapsed since this unlocking data was first determined to have been used or was last determined to have been used.

8. The locking/unlocking system according to Claim 1, further comprising a management server that is capable of communicating with the mobile device via a network, wherein
the management server comprises:
a server storage unit that stores unlocking data; and
an unlocking authorization granting unit that outputs unlocking data that has been stored in the server storage unit, and wherein
the mobile device is additionally provided with an unlocking authorization acquisition unit that transmits to the unlocking authorization granting unit user data that identifies a user carrying the mobile device and, in a case in which unlocking data is received from the unlocking authorization granting unit, causes the received unlocking data to be stored in the unlocking data storage unit, and wherein
the unlocking authorization granting unit determines whether or not the user data received from the unlocking authorization acquisition unit has been registered in advance, and in a case in which this user data is determined to have been registered in advance, transmits unlocking data to the unlocking authorization acquisition unit.

9. The locking/unlocking system according to Claim 4, wherein the mobile device and the locking/unlocking control device begin communicating with each other after the human detection sensor has detected a person.
